Europäisches Patentamt

European Patent Office

Office européen des brevets

(11) Publication number: **0 294 027**
**A2**

## (12) EUROPEAN PATENT APPLICATION

(21) Application number: **88303908.3**

(22) Date of filing: **29.04.88**

(51) Int. Cl.4: **C09J 3/12 , C09J 3/14 , C09J 5/00**

(30) Priority: **04.06.87 US 58086**

(43) Date of publication of application:
**07.12.88 Bulletin 88/49**

(84) Designated Contracting States:
**BE DE ES FR GB IT LU NL**

(71) Applicant: **GENCORP INC.**
**175 Ghent Road**
**Akron Ohio 44313(US)**

(72) Inventor: **Neubert, Terry C.**
**5153 Sunnybrook Road**
**Kent Ohio 44240(US)**

(74) Representative: **Armitage, Ian Michael et al**
**MEWBURN ELLIS & CO. 2/3 Cursitor Street**
**London EC4A 1BQ(GB)**

(54) **A multiple component quick set latex adhesive.**

(57) A latex adhesive system containas a plurality of components, typically a latex component 15 and a thickener component 25. Each component is usually applied to or located on a seperate substrate 10,20. The latex adhesive system can contain variuous additives such as flame retardants, fillers, emulsifiers, and the like. When the substrates are brought together, a reslutant latex adhesive composition 35 is formed since the pH of the thickner is changed and/or a reaction between the components occurs which causes an increase in viscosity, tack, etc., of the system. The increase in viscosity, tack, etc., occurs quickly or rapidly forming an adhesive, or tacky bond. Subsequently, the adhesive can be cured by heat. In such a manner, two or more substrates can be seperately maintained then brought together for a quick set, that is a tacky adherence, without any blow off of the adhesive components as in a forced air oven.

EP 0 294 027 A2

# A MULTIPLE COMPONENT QUICK SET LATEX ADHESIVE

The present invention relates to a multiple component latex adhesive system containing at least a latex component and a separated thickner component which when brought together form a tacky latex adhesive composition.

Heretofore, a latex solution was applied between two substrates and dried as in a forced air oven to remove the water therefrom, as well as to cure the same. However, the forced air would often blow off the top substrate or loosen the edges thereof so that good adherence of the latex system was not achieved throughout the substrate contact area. The two substrates were also subjected to separation by mechanical handling equipment before and during the drying operation.

According to one aspect of the present invention there is provided a multiple component latex adhesive system, comprising:

at least a latex component and a thickner component, said thickner component being separated from said latex component,

said latex component containing at least one latex polymer or copolymer made from one or more latex forming monomers, and

said latex component and said thickner component upon contact with each other being capable of forming a reslutant latex adhesive composition.

Typically, the latex component is applied to one substrate and the thickner component is applied to another or separate substrate. Contact of substrates results in a rapid increase in tack or viscosity between the latex component and the thickener component whereby a resultant latex adhesive composition is formed which adheres said substrates together. The latex component can be cationic or anionic and the thickener component can be anionic or cationic.

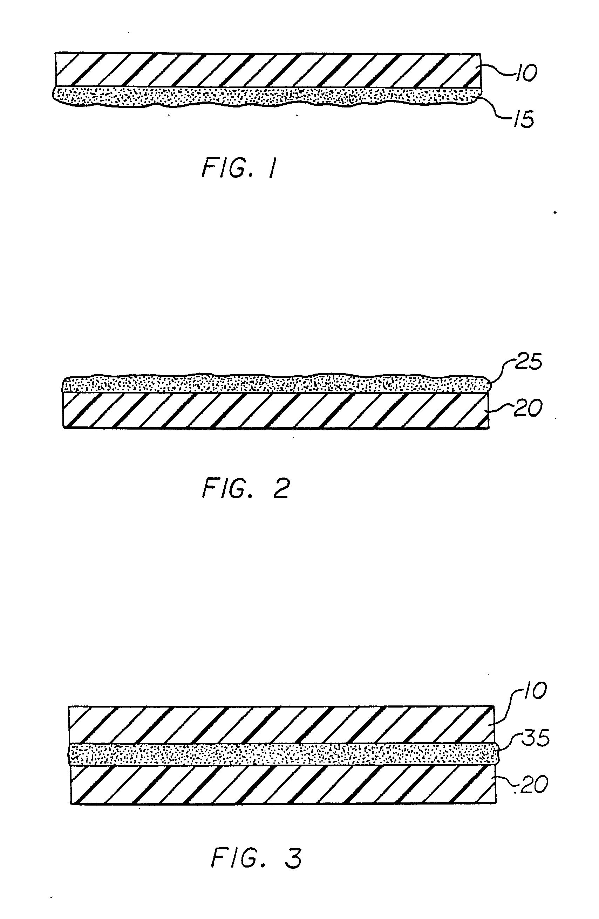

Fig. 1 is a side elevation view of a substrate containing a latex component of the present invention.

Fig. 2 is a side elevation view of a substrate containing a thickener component of the present invention thereon.

Fig. 3 is a side elevation view showing the two substrates adhered together through the formed latex adhesive composition.

The latex adhesive system of the present invention contains a plurality of components which when contacted or brought together rapidly or quickly react with one another to form a viscous or tacky latex adhesive composition. Desirably, two separate components exist, that is a latex component and a thickener component, which might be a second latex component. The various components are generally applied as a thin film to a suitable substrate such as a plastic sheet, paper, metal, or the like. The substrate desirably is nonabsorbant.

One or more conventional latexes, preferably aqueous latexes, are utilized as the latex component including latexes known to the art and to the literature. Such latexes can contain various fillers as well as additives therein as is also known to the art and to the literature. The latexes are generally anionic, although they can be cationic. The latex component generally has a high pH, that is generally in excess of 8.0 and desirably in excess of 10.0. However, the latex can also have a low pH, that is generally below 6.0. When another latex component is utilized as the thickener component, it generally is a cationic latex and has a low pH, that is 6.0 or less and desirably 4.0 or less. Thus, an anionic latex will exist on one substrate with a cationic latex existing on a second substrate.

The latex component is made from various conventional latex forming monomers as well as those known to the art and to the literature. One suitable class of latex forming monomers is the various conjugated dienes such as those having from about 4 to 8 carbon atoms and desirably from 4 to about 6 carbon atoms. Examples of specific diene monomers include piperylene, isoprene, 2,3-dimethyl-1,3-butadiene, and preferably butadiene such as 1,3-butadiene. Copolymers can be made utilizing the various diene monomers as well as other comonomers and the same will be discussed in greater detail hereinbelow.

Another class of latex forming monomers are the various acrylic esters. Such acrylic esters are generally acrylates or methacrylates wherein the ester portion contains an alkyl group having from 1 to 18 carbon atoms, and preferably from 1 to 8 carbon atoms. Examples of the various esters include ethyl acrylate, butyl acrylate, 2-ethyl hexyl acrylate, methyl methacrylate, butyl methacrylate, and 2-ethyl methacrylate. Ethyl acrylate, butyl acrylate, and methyl methacrylate are preferred.

The vinyl esters constitute yet another class of latex forming monomers. Inasmuch as the various vinyl ester monomers typically yield very high glass transition temperature polymers, plasticizers are generally utilized in conventional amounts therewith. Numerous plasticizers are known to the art and to the literature such as dioctylphthalate. The vinyl ester monomers have an ester portion which is desirably an alkyl group having from 1 to 8 carbon atoms. A preferred vinyl ester is vinyl acetate.

Still another class of suitable latex forming monomers are the ethylene monomers. The ethylene monomers are generally polymerized with a comonomer such as vinyl chloride or a vinyl ester as discussed hereinabove.

Another class of latex type forming monomers include vinyl chloride, vinylidene chloride, and the like.

As noted above, the various latex type forming monomers are often utilized with comonomers to form copolymers. Such comonomers are well known to the art and to the literature and few will be listed herein by way of illustration. Thus, various vinyl substituted aromatic monomers, acrylonitrile monomers, and various different conjugated dienes can be utilized with the conjugated diene monomer to form copolymers. The vinyl substituted aromatic monomers generally have from 8 to 12 carbon atoms with styrene being preferred. A preferred copolymer is made from monomers of styrene and butadiene. The conjugated dienes have from 4 to 8 carbon atoms and are a different monomer such that an interpolymer is formed, for example a copolymer of butadiene and isoprene.

The acrylic esters can be utilized with various comonomers such as the above noted vinyl substituted aromatic monomers, the various above-noted vinyl ester monomers, or acrylonitrile. Moreover, interpolymers can be formed by reaction with a different acrylic ester monomer.

The above-noted vinyl ester monomers can be reacted with various comonomers such as ethylene, or an ester of a mono or a dicarboxylic acid having a total from 2 to about 12 carbon atoms, as for example diethyl furmarate, dibutyl fumarate, diethyl maleate, an dibutyl maleate.

It is generally preferred in the present invention to utilize various functional monomers in the formation of the latex solutions. Such functional monomers are generally conventional and are known to the art as well as to the literature. They are generally utilized in that they impart stability and strength to the latex polymer or the adhesive system. Such functional monomers are generally anionic monomers such as the various acrylamides, and the various methacryamides, including alkyl derivatives thereof having 1 or 2 carbon atoms attached to either the nitrogen and/or the vinyl group, for example dimethylacrylamide, methylene bisacrylamide, and the like. Other functional monomers include the unsaturated mono-and dicarboxylic acids which generally have a total of from about 3 to about 8 carbon atoms, desirably from about 3 to about 6 carbon atoms, and preferably from about 3 to about 5 carbon atoms. Examples of monocarboxylic acids include acrylic acid and methacrylic acid. Examples of dicarboxylic acids include fumaric acid, maleic acid, itaconic acid, and the like. Still other functional monomers include various vinyl esters wherein the ester group is generally an alkyl group having from 1 to 6 carbon atoms, a substituted chloralkyl group having a total of 1 to 6 carbon atoms, and the like. Specific examples include n-butyl vinyl ether, vinyl chloroethyl ether, and the like. The amount of such functional monomers are well known to the art and generally range from about 0.5 to about 15% by weight and often from 1 to a few or several percent, that is 4 to about 6 or 7 percent by weight based upon the total weight of all of the latex forming monomers.

The amount of the various latex monomers and comonomers are known to the art and to the literature and are utilized in effective amounts to produce a suitable latex polymer or copolymer as well as a suitable aqueous latex component to form the latex adhesive system of the present invention in association with the thickener component. As discussed more fully hereinbelow, an anionic latex can also be utilized with a cationic latex thickener to yield a tacky gel adhesive system or composition in accordance with the present invention.

The preparation of the various latex solutions utilized as the latex component in the present invention is known to the art and to the literature. The latex component of the present invention often is an emulsion and thus can contain various conventional additives in conventional amounts such as various emulsifiers, various chain transfer agents or extenders which act as molecular weight modifiers, various free-radical initiators, various chelating agents, various short stops, various electrolytes, and the like. Inasmuch as such additives are known to the art as well as to the literature, an extensive list thereof will not be set forth herein. Rather, only brief examples will be set forth. Thus, the emulsifiers can be various soaps, surfactants, dispersing agents, with specific examples including various alkyl sulfates, various alkyl sulfosuccinates, various alkyl.aryl sulfonates, various alpha olefin sulfonates, various quarternary ammonium salts, various amine salts, various fatty or resin acid salts, and the like. Examples of chain extenders include mercaptans such as the alkyl and/or aralkyl mercaptans having from 8 to 18 carbon atoms such as n-octyl mercaptan, n-dodecyl mercaptan, and the like. Examples of free radical initiators include ammonium, potassium persulfate, hydrogen peroxide, cumene hydroperoxide, t-butyl hydroperoxide, and the like. Examples of chelating agents include ethylene diamine tetraacetic acid, citric acid, etc., and their ammonium, potassium, or sodium salts.

The latex solutions of the present invention can also contain other additives such as antioxidants, biocides, defoamers, and the like, as known to the art and to the literature. They can also contain conventional fillers such as various clays, kaolin, calcium carbonate, titanium dioxide, zinc oxide, antimony oxide, and other inorganic fillers. Another additive of the aqueous latex component of the present invention are various conventional flame retardants as well as those known to the art and to the literature in sufficient amounts to achieve a suitable flame retardancy. Since often organic flame retardants act as a plasticizer, little or no organic flame retardant agent is utilized when a hard latex polymer or copolymer is desired. However, if a soft latex polymer or copolymer is desired, usually a fair amount of an organic flame retardant and/or a plasticizer is utilized.

The thickener component of the present invention is desirably a liquid or a latex which is applied to a separate substrate usually as a thin film. The thickener component which desirably contains water therein or is a water-based composition, is a different composition from the latex component so that upon contact therewith, a quick, rapid adhesion occurs as through an increase in viscosity, tack, etc. Thus, a substrate is coated with a thickener compound capable of forming an adhesive system with the latex component. The adhesive system is formed either through a change of pH or by a chemical reaction between the two components. That is, when the thickener component is combined, mingled, or made to be integral with the latex component, an adhesive is formed within a very short time period, as within a minute and usually within a matter of a few seconds. The amount of thickener, for example the film thickness or concentration thereof is an effective amount to achieve a suitable tack, bond strength, etc., such that the substrates are held together during normal subsequent use, for example as during storage and/or cure of the tacky latex composition as in a forced air oven. When the pH is the criterion for forming the adhesive system, the pH of the latex component is desirably high and the pH of the thickener component is often antipodal thereto and hence is low. That is, 6.0 or less. However, should the latex component have a low pH, as for example when a cationic latex is utilized, the thickener component desirably will have a different or a high pH. The pH of the latex system can be increased by utilizing basic compounds such as sodium carbonate, sodium hydroxide, and the like. When a chemical reaction is a criterion for forming the latex adhesive system, the thickener component is any compound which reacts with the latex composition to form a tacky, adhesive, sticky, etc. composition sufficient to join and maintain two separate substrates together until cure of the composition is effected.

The thickener component of the present invention is generally any water soluble natural gum, water soluble high molecular weight polymer, a cationic latex, an anionic latex, or coagulant which upon combination with the latex component forms a tacky, or adhesive type material. Such materials are generally known to the art as well as to the literature. For example, McCuthcheon's Functional Materials, 1978 Annual Edition, p156-169, MC Publishing Company, Glen Rock, NJ, sets forth numerous types of thickener components generally falling under the five broad catagories of a water soluble natural gum, a water soluble high molecular weight polymer, a cationic latex, an anionic latex, or a coagulant, and is thus hereby fully incorporated by reference with regard to the numerous types of thickeners which can be utilized in the present invention. Thus, various gums such as a carbohydrate based mixed ester-ether, such Abinco Gel made by Anheuser-Busch, various wheat starches, an anionic guar gum, a nonionic guar gum, natural gum derivatives, xanthan gum, and the like can be utilized. Examples of water soluble, high molecular weight polymers include the various acrylic copolymers, crosslinked acrylic copolymers, alkali-soluble acrylic copolymer emulsions, ammonium polyacrylate, sodium polyacrylate, carboxyl polymethylene, high molecular weight esters, high molecular weight polymers of ethylene oxide, and the like. Numerous cationic as well as anionic latexes exist which are too numerous to list with random examples including various monocarboxylic alcohol amides such as lauric diethanolamide, stearic diethanolamide, lauric isopropanolamide, and the like, various modified alkanolamide, various alcohols such as cetyl alcohol, stearyl alcohol, as well as the various latexes set forth hereinabove which are hereby incorporated, for example a conjugated diene latex, an acrylic ester, a vinyl ester, etc. Example of coagulants include alum, calcium chloride, cationic flocculants, anionic flocculants, various polyamines, and the like. In general, various acid or salt solutions tend to coagulate latex components. Thus, sodium carbonate, and the like, can also be utilized. Alum is a desired coagulant when the latex component is an anionic latex.

Of the various types of thickener compounds which can be utilized, the water soluble high molecular weight polymers are generally desired. A desired class of such compounds which are effective thickeners and/or tackifiers are the various polyvinyl alcohols. Preferred thickeners of the present invention are polymers of acrylic acid, copolymers thereof, derivatives thereof, or salts thereof, as for example polyacrylic acid, polymethacrylic acid, polyacrylamide, alkali soluble acrylic copolymer emulsions, crosslinked swellable acrylic copolymer emulsions, sodium polyacrylate, ammonium polyacrylate, with an acrylic copolymer emulsion being highly preferred along with the sodium salt thereof.

The amounts of the various components utilized on a substrate, that is the amount of the latex component on its particular substrate and the amount of the thickener component on its particular substrate is not critical as long as an adequate amount of the component is applied thereto. By adequate amount it is meant an amount sufficient to obtain a minimum bonding strength, adhesive strength, etc. when joined with the remaining component. Thus, the entire substrate can be uniformly coated or only portions thereof such as a ribbon, dots, and the like. The thickness of the particular component can thus be from about 2 mils to about 20 mils. Another requirement is simply that a rapid viscosity or tack increase occurs so that a quick set is achieved upon contact of the thickener component with the latex component.

Substrate 10 can be utilized for the aqueous latex component and can generally be any substrate which is desired to be bound to another but is usually a separate substrate. Generally the substrate is nonabsorbing so it does not absorb the water or the latex composition. The substrate can be a polymer film, aluminum foil, paper asphalt impregnated paper, or coated paper. Examples of suitable nonabsorbing polymer films include polyvinylchloride, polyethylene and polyvinylidenechloride. The latex component 15 is applied to substrate 10 in any conventional manner as by spraying, brushing, roll coating, and the like. Desirably, a thin liquid film is produced which uniformly contacts the entire surface of the substrate. Alternatively, as noted, the latex may be applied in dots or ribbons as desired to achieve adequate bonding with minimum latex use. Thickener substrate 20 can be any substrate to which substrate 10 is desired to be bonded. Generally, thickener substrate 20 is paperboard, various building products such as insulation material, high density fiberglass, urethane wallboards, fiberglass mats, composition board, and the like. Thickener component 25 is applied to substrate 20 in any conventional manner as by spraying, brushing, roll coating, etc. to generally achieve a uniform and even distribution of the entire surface thereof or in a manner to match the ribbon, dots, etc. of the latex substrate 10. An adhesive, tacky, etc. layer 35 is thus formed when the two substrates are joined together. Inasmuch as the nature of the adhesion or tack will vary with regard to the specific type of latex component, the specific type of thickener component as well as the pH of each component, numerous combinations can be utilized. With regard to a preferred embodiment of the present invention, sufficient tack or adhesion exists such as to prevent the substrates from being separated, slid, squirmed, etc. with respect to one another during heat cure of the resulting tacky latex composition as by forced air in an oven.

The present invention will be better understood by reference to the following examples.

## EXAMPLE I

A two part system was utilized having a high pH anionic flame retardant composition butadiene/styrene/vinylidene chloride latex on one substrate and a low pH acrylic acid copolymer thickener on the other substrate:

## MATERIALS:

Gen Flo 8520 (GenCorp) anionic buadiene/styrene/vinylidene chloride latex, pH 7.5, TSC-54.4%.

Paragum, 1006 (Parachem Southern) an acrylic copolymer emulsion, pH 2.5, TSC-40.1%.

AC440K (Alachem) a hydrated alumina (Alochem).

Sodium carbonate.

Semi Rigid Vinyl Film.

Fiberglass panels (1/2" thick wallboard type from Owens Corning Fiberglass).

Hydrol 710B (Alcoa), an hydrated aluminum.

## PROCEDURE:

1. Prepare a latex component by mixing together 92 gms of GF-8520, 75 gms of AC440K and 25.0 gms of Hydrol 710B. Then add 9.0 gms of 10% sodium carbonate solution to yield a compound with a 9.3 pH and a viscosity of 3200 cps.

2. Thicken 50 gms of Paragum 1006 to 3000 cps by adding 2.65 gms of 10% sodium carbonate with a resulting pH of 5.6 and total solids content (TSC) of 32%.

3. Divide the thickened Paragum 1006 into 4 equal portions and treat as follows:

a) Dilute one portion to 16% TSC with deionized water and rethicken to 3000 cps by adding 10% sodium carbonate solution.

b) Dilute one portion to 8% TSC with deionized water and rethicken to 3000 cps by adding 10% sodium carbonate solution.

c) Dilute one portion to 4% TSC with deionized water and rethicken to 3000 cps by adding 10% sodium carbonate solution.

d) Leave the final portion as is at 32% TSC.

4. Test the wet tack by applying a thin layer of the latex solution 1) to the surface of the vinyl film and a thin layer of the solution 3a, b, c, or d to the surface of the fiberglass board. Then press the samples together and allow 5 seconds to react before pulling them apart by hand noting the difference in tack for each case.

WET TAC TEST RESULTS:

I (32%) 3d pressed onto 1 - Considerable adhesion, good tack

II (16%) 3a pressed onto 1 - as good as I

III (8%) 3b pressed onto 1 - adequate but less tack than I or II

IV (4%) 3c pressed onto 1 - little adhesion, low tack

EXAMPLES

A two part system using a low pH anionic flame retardant latex component on one substrate and a high pH sodium carbonate solution on the other substrate.

MATERIALS:

The same materials were utilized as set forth in Example I with the exception that Gen-Flo 8520 had a pH of 4.5 and that Hydrol 710B was not utilized. Sipoteric Slip, a 30% amphoteric surfactant from Alcolac, was utilized.

PROCEDURE:

1. Prepare a latex component by mixing together 92 gms of GF-8520, 100 gms of AC440K alumina, and 4 gms of Sipoteric SLIP. Then add 11 gms of Paragum 1006 latex. The resulting pH of the latex composition is 4.5.

2. Prepare a caustic solution by adding 2.3 gms of Paragum 1006 to 100 gms of 0.75% sodium carbonate solution, pH-9.6, viscosity 270 cps

3. Test the tack by applying dots of 1 on the surface of the semi rigid vinyl film and coating the fiberglass with a thin film of 2. Then press the vinyl film onto the glass mat and allow the components to react for 5 seconds before pulling apart by hand. As a control GF-8520 a vinylidene chloride latex, made by GenCorp, 92 gms, was mixed with alumina (100 gms) at pH5 was placed as dots onto the vinyl film and 2 was coated as a thin film onto the fiberglass.

WET TAC TEST RESULTS

I 1 pressed onto 2 - good initial adhesion, high tack.

II control pressed onto 2 - no initial adhesion, low tack.

As apparent from the above examples, good bonding strength was obtained in a relatively short period of time whereas the control had no adhesion.

**Claims**

1. A multiple component latex adhesive system, comprising:

at least a latex component and a thickener component, said thickener component being separated from said latex component,

said latex component containing at least one latex polymer or copolymer made from one or more latex forming monomers, and

said latex component and said thickener component upon contact with each other being capable of forming a resultant latex adhesive composition.

2. A multiple component latex adhesive system according to claim 1 wherein the thickener is a water soluble natural gum, a water soluble high molecular weight polymer, a cationic latex polymer, an anionic latex polymer, or a coagulant.

3. A multiple component latex adhesive system according to claim 1 or claim 2, wherein said latex component is a copolymer made from one or more latex forming monomers wherein the latex forming monomer is a conjugated diene monomer, an acrylic ester monomer, a vinyl ester monomer, a vinyl chloride type monomer, an ethylene monomer, or combinations thereof, said polymer optionally also containing a functional monomer.

- 4. A multiple component latex adhesive system according to claim 3, wherein said latex forming monomer is a conjugated diene having from 4 to 8 carbon atoms, an acrylic ester wherein the ester portion contains an alkyl group having from 1 to 18 carbon atoms, a vinyl ester wherein the ester portion contains an alkyl group having from 1 to 8 carbon atoms, ethylene, vinyl chloride, or vinylidene chloride, or wherein said latex polymer is a copolymer made from; A) a conjugated diene having from 4 to 8 carbon atoms and (a) a vinyl substituted aromatic having a total of from 8 to 12 carbon atoms, (b) acrylonitrile, or (c) a different conjugated diene having from 4 to 8 carbon atoms; B) an acrylic ester wherein the ester portion contains an alkyl group having from 1 to 18 carbon atoms and (a) a vinyl substituted aromatic having from 8 to 12 carbon atoms, (b) a vinyl ester wherein said ester portion contains an alkyl group having from 1 to 8 carbon atoms, (c) a different acrylic ester, or (d) acrylonitrile; or C) a copolymer of a vinyl ester wherein the ester portion contains an alkyl group having from 1 to 8 carbon atoms and (a) an ethylene, (b) an ester of a dicarboxylic or a monocarboxylic acid having a total of from 2 to 12 carbon atoms; and wherein said functional monomer is (a) acrylamide, methacrylamide, or derivatives thereof, (b) a mono-or a dicarboxylic acid, or (c) a vinyl ether.

5. A multiple component latex adhesive system according to claim 4, wherein said latex component is made from a latex forming monomer of a conjugated diene having from 4 to 8 carbon atoms, or wherein said latex polymer is a copolymer made from a conjugated diene having from 4 to 8 carbon atoms, and (a) a vinyl substituted aromatic having from 8 to 12 carbon atoms, (b) acrylonitrile or (c) a different conjugated diene having from 4 to 8 carbon atoms, and wherein said thickener is a water soluble high molecular weight polymer, or a coagulant.

6. A multiple component latex adhesive system according to any preceding claim wherein said thickener is an acrylic polymer, an acrylic copolymer emulsion, a polyacrylate, or a salt thereof.

7. A multiple component latex adhesive system according to any one of the preceding claims wherein said latex component is a film located on a substrate, and wherein said thickener component is located on a seperate substrate.

8. A multiple component latex adhesive system according to any one of the preceding claims wherein the pH of one of said components is at least 8.0 and wherein the pH of said remaining component is 6.0 or less.

9. A latex adhesive system according to claim 8 wherein said latex component has a pH of at least 8.0, and wherein said thickener component has a pH of 6.0 or less.

10. A multiple component latex adhesive system according to claim 9 wherein said latex component has a pH of at least 10.0, and wherein said thickener component has a pH of 4.0 or less.

11. A multiple component latex adhesive system according to any one of the preceding claims wherein said latex component is an anionic latex, and wherein said thickener component is cationic.

12. A latex adhesive composition, comprising; a composition formed by the contact of the latex component and the thickener component of the system of any one of the preceding claims said contact of said components causing an increase in viscosity whereby said latex adhesive composition is formed.

13. A latex adhesive composition according to claim 12 wherein said latex composition is cured.

FIG. 1

10
15

FIG. 2

25
20

FIG. 3

10
35
20